(19) Europäisches Patentamt / European Patent Office / Office européen des brevets

(11) **EP 3 605 467 B1**

(12) **EUROPEAN PATENT SPECIFICATION**

(45) Date of publication and mention
of the grant of the patent:
**09.08.2023 Bulletin 2023/32**

(21) Application number: **18774344.8**

(22) Date of filing: **29.03.2018**

(51) International Patent Classification (IPC):
**G06T 7/90** *(2017.01)*    **G01J 3/02** *(2006.01)*
**G01J 3/50** *(2006.01)*

(52) Cooperative Patent Classification (CPC):
**G01J 3/0264; G01J 3/027; G01J 3/504; G06T 7/90;**
G06T 2207/10024; G06T 2207/20104

(86) International application number:
**PCT/JP2018/013319**

(87) International publication number:
**WO 2018/181745 (04.10.2018 Gazette 2018/40)**

(54) **COATING COLOR IDENTIFYING DEVICE, COATING COLOR IDENTIFYING METHOD, COATING COLOR IDENTIFYING PROGRAM, AND COMPUTER-READABLE MEDIUM CONTAINING COATING COLOR IDENTIFYING PROGRAM**

VORRICHTUNG ZUR IDENTIFIZIERUNG VON STREICHFARBEN, VERFAHREN ZUR IDENTIFIZIERUNG VON STREICHFARBEN, PROGRAMM ZUR IDENTIFIZIERUNG VON STREICHFARBEN UND COMPUTERLESBARES MEDIUM MIT EINEM PROGRAMM ZUR IDENTIFIZIERUNG VON STREICHFARBEN

DISPOSITIF D'IDENTIFICATION DE COULEUR DE REVÊTEMENT, PROCÉDÉ D'IDENTIFICATION DE COULEUR DE REVÊTEMENT, PROGRAMME D'IDENTIFICATION DE COULEUR DE REVÊTEMENT ET SUPPORT LISIBLE PAR ORDINATEUR CONTENANT UN PROGRAMME D'IDENTIFICATION DE COULEUR DE REVÊTEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2017 JP 2017073108**

(43) Date of publication of application:
**05.02.2020 Bulletin 2020/06**

(73) Proprietor: **KANSAI PAINT CO., LTD.
Amagasaki-shi, Hyogo-ken 661-8555 (JP)**

(72) Inventor: **MASUDA, Yutaka
Hiratsuka-shi
Kanagawa 254-8562 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) References cited:
**JP-A- 2003 006 197    JP-A- 2005 157 771
JP-B2- 3 234 753    US-A1- 2005 110 797
US-B2- 8 339 665    US-B2- 8 606 731**

**Description**

TECHNICAL FIELD

The present invention relates to a paint color specifying apparatus, a paint color specifying method, a paint color specifying program, and a computer-readable medium including the paint color specifying program.

BACKGROUND ART

Paint colors of vehicles include solid paint colors in which there is little change in intensity (a flip-flop value referred to as an "FF value" hereinafter) due to a difference between reflection angles with respect to incident light from a light source, pearl paint colors having large FF values with respect to solid paint colors, and metallic paint colors. With respect to solid paint colors, there are cases in which a paint color is examined, for example, according to a printed color sample book. In addition, with respect to pearl paint colors and metallic paint colors having large FF values, there are cases in which painting samples (coating plates) of several kinds obtained by painting a metal plate with actual paint are prepared for examination of paint colors.

There are cases in which vehicle manufacturer designers convey a texture of desired paint color to paint color manufacturers, for example, using image pictures such as landscape pictures and stills when examining paint colors to be applied to vehicles. Particularly, when the texture of a metallic paint color or the like is conveyed, the texture of the paint color is conveyed using color change according to a reflection angle with respect to incident light from a light source.

As a method of specifying a paint color of an industrial product, particularly, a metallic paint color with a high standard of design, from digital images representing the texture of a color suggested by a client, a method of specifying a paint color from a computer graphic image, which displays a computer graphic image suited to the impression of desired paint colors on a display device, obtains color information of displayed colors in designated regions which are two or more portions on the displayed image, searches a database in which color information with respect to a plurality of paint colors has been stored in advance for paint colors having color information similar to the color information of the displayed colors and selects a paint color has been proposed (refer to Patent Document 1, for example). When a paint color such as a metallic paint color is specified in such a method, a plurality of sampling points corresponding to reflection angles and luminances (brightnesses) are specified and characteristics of a reflection angle and brightness based on the sampling points are calculated. For example, when there are two sampling points, a reflection angle and brightness are calculated as characteristics of straight lines. In addition, when there are three or more sampling points, a reflection angle and brightness are calculated as characteristics of approximate curves based on the sampling points.

US 2005/110797 A1 discloses a method for specifying a paint color from a computer graphics picture, wherein the computer graphics picture suitable for the impression of a desired paint color is displayed on a display unit, color information on the displayed colors in two or more designated regions obtained on the displayed picture, and a paint color having color information approximate to the color informations on the display colors are searched and selected from a database previously storing color informations on a plurality of paint colors.

US 8 606 731 B2 teaches a method for creating a database for paint colors having a desired texture, which includes storing spectral reflectance data and micro-brilliance data of paint colors after associating each spectral reflectance data and each micro-brilliance data with a paint color code. Texture evaluation values of sample paint colors are stored after associating the each texture evaluation value with the paint color code and characteristic quantities of the paint colors expressing textures are calculated using the spectral reflectance data and the micro-brilliance data. The characteristic quantities are stored after associating each characteristic quantity with the paint color code. A neural network is trained using the characteristic quantities and the texture evaluation values of the sample paint colors as training data. Characteristic quantities of the paint colors other than the sample paint colors are input into the neural network after the training, and output data after associating each output data with the paint color code are stored.

PRIOR ART DOCUMENTS

PATENT DOCUMENTS

[Patent Document 1] Japanese Unexamined Patent Application, First Publication No. 2005-157771

SUMMARY OF THE INVENTION

PROBLEMS TO BE SOLVED BY THE INVENTION

However, there were cases in which an approximate curve that approximates sampling points in a digital image are not able to correctly represent color characteristics (a curve of color characteristics) of a paint color which are indicated by change in a reflection angle and brightness when the number of sampling points is small.

On the other hand, there are cases in which an approximate curve of sampling points is deformed and thus become greatly different from color characteristics of actual painting when three or more sampling points in a digital image are designated. Actual painting has color characteristics represented by a curve having no peaks and valleys, in which the brightness constantly decreases when a reflection angle increases from a highlighted portion to a shaded portion. There are cases in which peaks and valleys appear on an approximate curve and represent unnatural color characteristics and thus a paint color desired by a client is not able to be specified from a digital image when three or more sampling points are designated.

An object of the invention devised in view of the aforementioned circumstances is to provide a paint color specifying apparatus, a paint color specifying method, a paint color specifying program, and a computer-readable medium including a paint color specifying program which can easily specify a paint color desired by a client from a digital image.

MEANS FOR SOLVING THE PROBLEMS

(1) In order to achieve the aforementioned object, a paint color specifying apparatus of the invention includes: an image display which causes a display device to display a digital image such that a highlighted portion and a shaded portion of the digital image are able to be designated; a color information acquiring device which acquires color information of the designated highlighted portion and shaded portion; a texture information selection display which causes the display device to display texture information of paint colors such that texture information of a paint color is selectable; a texture information acquiring device which acquires the selected texture information; a color characteristic calculating device which uses a correction coefficient corresponding to the acquired texture information in accordance with the acquired color information and thereby calculates color characteristics of a paint color represented by change in brightness of reflected light according to a reflection angle with respect to incident light; and a paint color specifying device which specifies a paint color in accordance with the calculated color characteristics. In the paint color specifying apparatus of the invention, the color characteristic calculating device calculates color characteristics approximating a curve along which the brightness constantly decreases for increase in the reflection angle from the highlighted portion to the shaded portion.

(2) Further, in the paint color specifying apparatus of an embodiment, the texture information selection display may display words of an impression of shade of a paint color which represent change in the brightness according to the reflection angle such that the words are selectable as the texture information.

(3) Further, in the paint color specifying apparatus of another embodiment, the color information acquiring device may acquire the color information by averaging a predetermined range including the designated highlighted portion or shaded portion.

(4) Further, the paint color specifying apparatus of another embodiment may further include a correction coefficient storage which stores a plurality of preset combinations in which the texture information corresponds to the correction coefficient, wherein the color characteristic calculating device selects the correction coefficient corresponding to the acquired texture information from the stored combinations and thereby uses the correction coefficient for calculation of the color characteristics.

(5) Further, the paint color specifying apparatus of another embodiment may further include a sample characteristic storage which stores previously measured color characteristics of painting samples painted with different paint colors, wherein the paint color specifying device specifies the paint color in accordance with color characteristic comparison between the stored color characteristics and the calculated color characteristics.

(6) Further, in the paint color specifying apparatus of another embodiment, the paint color specifying device may specify a paint color approximating the color characteristics in accordance with comparison between the color characteristics.

(7) Further, the paint color specifying apparatus of another embodiment may further include a paint color selection display which causes the display device to display the specified paint color such that the paint color is selectable.

(8) Further, the paint color specifying apparatus of another embodiment may further include a hue change detector which detects hue change in the acquired color information of the highlighted portion and color information of the shaded portion.

(9) In order to achieve the aforementioned object, a paint color specifying method of the invention includes: an image display step of causing a display device to display a digital image such that a highlighted portion and a shaded portion of the digital image are able to be designated; a color information acquisition step of acquiring color information of the designated highlighted portion and shaded portion; a texture information selection display step of causing the display device to display texture information of paint colors such that texture information of a paint color is selectable;

a texture information acquisition step of acquiring the selected texture information; a color characteristics calculation step of using a correction coefficient corresponding to the acquired texture information in accordance with the acquired color information and thereby calculating color characteristics of a paint color represented by change in brightness of reflected light according to a reflection angle with respect to incident light; and a paint color specifying step of specifying a paint color in accordance with the calculated color characteristics. In the color characteristics calculation step, color characteristics approximating a curve along which the brightness constantly decreases for increase in the reflection angle from the highlighted portion to the shaded portion are calculated.

(10) In order to achieve the aforementioned object, a paint color specifying computer program of the invention comprises instructions which, when the program is executed by a computer, cause the computer to carry out: an image display process of causing a display device to display a digital image such that a highlighted portion and a shaded portion of the digital image are able to be designated; a color information acquisition process of acquiring color information of the designated highlighted portion and shaded portion; a texture information selection display process of causing the display device to display texture information of paint colors such that texture information of a paint color is selectable; a texture information acquisition process of acquiring the selected texture information; a color characteristics calculation process of using a correction coefficient corresponding to the acquired texture information in accordance with the acquired color information and thereby calculating color characteristics of a paint color represented by change in brightness of reflected light according to a reflection angle with respect to incident light; and a paint color specifying process of specifying a paint color in accordance with the calculated color characteristics. In the color characteristics calculation process, color characteristics approximating a curve along which the brightness constantly decreases for increase in the reflection angle from the highlighted portion to the shaded portion are calculated.

(11) In order to achieve the aforementioned object, a computer-readable medium of the invention comprises instructions which, when executed by a computer, cause the computer to carry out: an image display process of causing a display device to display a digital image such that a highlighted portion and a shaded portion of the digital image are able to be designated; a color information acquisition process of acquiring color information of the designated highlighted portion and shaded portion; a texture information selection display process of causing the display device to display texture information of paint colors such that texture information of a paint color is selectable; a texture information acquisition process of acquiring the selected texture information; a color characteristics calculation process of using a correction coefficient corresponding to the acquired texture information in accordance with the acquired color information and thereby calculating color characteristics of a paint color represented by change in brightness of reflected light according to a reflection angle with respect to incident light; and a paint color specifying process of specifying a paint color in accordance with the calculated color characteristics. In the color characteristics calculation process, color characteristics approximating a curve along which the brightness constantly decreases for increase in the reflection angle from the highlighted portion to the shaded portion are calculated.

Effects of the Invention

According to the invention, it is possible to provide a paint color specifying apparatus, a paint color specifying method, a paint color specifying program, and a computer-readable medium including the paint color specifying program which can easily specify a paint color desired by a client from a digital image.

BRIEF DESCRIPTION OF THE DRAWINGS

FIG. 1 is a functional block diagram showing an example of a software configuration of a paint color specifying apparatus in an embodiment.
FIG. 2 is a flowchart showing an example of an operation of the paint color specifying apparatus in an embodiment.
FIG. 3 is a diagram showing an example of a relationship between incident light and reflection angles of reflected light in the paint color specifying apparatus in an embodiment.
FIG. 4 is a flowchart showing an example of a method of calculating a correction coefficient used in the paint color specifying apparatus in an embodiment.
FIG. 5 is a diagram showing an example of a paint color corresponding to the texture of painting selected to calculate a correction coefficient used in the paint color specifying apparatus in an embodiment.
FIG. 6 is a diagram showing an example of the method of calculating a correction coefficient used in the paint color specifying apparatus in an embodiment.
FIG. 7 is a diagram showing an example of the method of calculating a correction coefficient used in the paint color specifying apparatus in an embodiment.

FIG. 8 is a diagram showing an example of the method of calculating a correction coefficient used in the paint color specifying apparatus in an embodiment.

FIG. 9 is a diagram showing an example of color characteristics calculated in the paint color specifying apparatus in an embodiment.

FIG. 10 is a graph showing an example of color characteristics calculated in the paint color specifying apparatus in an embodiment.

EMBODIMENTS FOR CARRYING OUT THE INVENTION

Hereinafter, a paint color specifying apparatus, a paint color specifying method, a paint color specifying program, and a computer-readable medium including the paint color specifying program in an embodiment of the invention will be described with reference to the drawings.

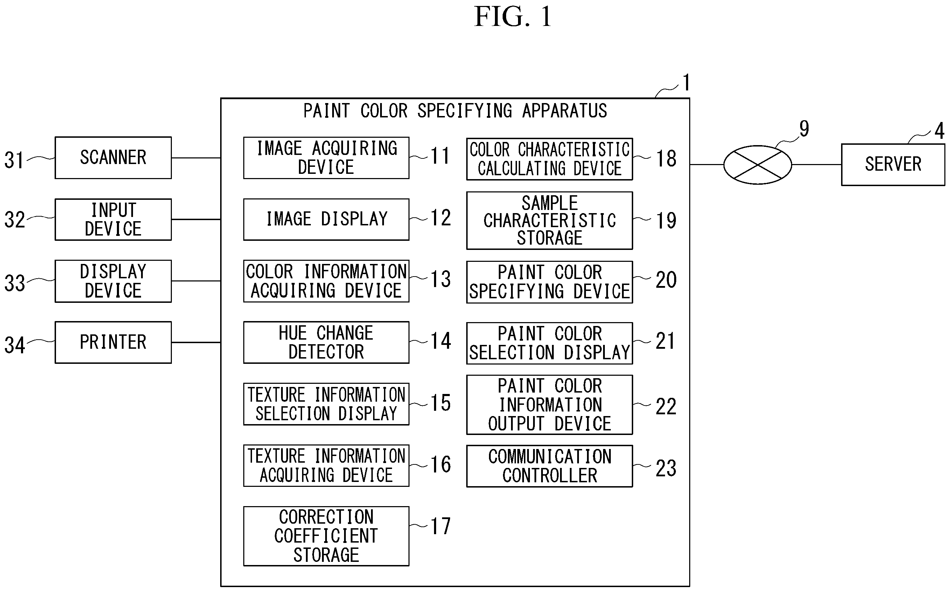

First, a software configuration of a paint color specifying apparatus will be described using FIG. 1. FIG. 1 is a functional block diagram showing an example of a software configuration of a paint color specifying apparatus in an embodiment.

In FIG. 1, a paint color specifying apparatus 1 has functions of an image acquiring device 11, an image display 12, a color information acquiring device 13, a hue change detector 14, a texture information selection display 15, texture information acquiring device 16, a correction coefficient storage 17, a color characteristic calculating device 18, a sample characteristic storage 19, a paint color specifying device 20, a paint color selection display 21, a paint color information output device 22, and a communication controller 23.

Each of the aforementioned functions of the paint color specifying apparatus 1 is a functional module realized by a paint color specifying program (software) that controls the paint color specifying apparatus 1. The paint color specifying program is provided, for example, from a server that provides programs or provided from a recording medium. For example, the paint color specifying apparatus 1 is a general-purpose apparatus such as a desk-top PC, a notebook PC, a tablet PC, a PDA or a smartphone, or a dedicated apparatus for executing the paint color specifying program. The paint color specifying apparatus 1 can be operated by a central processing unit (CPU) which is not shown and executes a program stored in a random access memory (RAM), a read only memory (ROM) or a hard disk drive (HDD). That is, each of the aforementioned functions of the paint color specifying apparatus 1 can be realized by a CPU executing the paint color specifying program stored in a RAM or the like.

The paint color specifying apparatus 1 is connected to a scanner 31, an input device 32, a display device 33 and a printer 34. Functions of the scanner 31, the input device 32, the display device 33 and the printer 34 may be included as functions of the paint color specifying apparatus 1. In addition, the paint color specifying apparatus 1 is connected to a server 4 through a network 9. The scanner 31 reads an image printed on paper or a film to generate a digital image. For example, the input device 32 is a device for inputting data, such as a keyboard, a mouse, a recording medium reading device, or a camera. In FIG. 1, the scanner 31 is separate from the input device 32. The display device 33 displays display data output from the paint color specifying apparatus 1. The display device 33 is a liquid crystal display, for example. Note that, the input device 32 and the display device 33 may be shared using a device such as a touch panel. The printer 34 prints and outputs paint preparation data with respect to a specified paint color, for example.

The server 4 is connected to the paint color specifying apparatus 1 through the network 9 such that the server 4 can communicate with the paint color specifying apparatus 1. The server 4 provides, for example, programs and data to the paint color specifying apparatus 1. The server 4 may store color characteristics of paint color samples to be stored in a sample characteristic storage which will be describe later and provide the color characteristics to the paint color specifying apparatus 1.

In the paint color specifying apparatus 1, the image acquiring device 11 acquires a digital image. The digital image is image data obtained by digitalizing, for example, a color picture of a vehicle, a landscape picture, a still or an illustration. For example, the image acquiring device 11 acquires a digital image of a printed picture scanned and digitalized by the scanner 31. The image acquiring device 11 may acquire a digital image captured by a digital camera. The image acquiring device 11 may acquire a digital image recorded on a recording medium read by the input device 32. Further, the image acquiring device 11 may acquire a digital image from the server 4 connected through the network 9. The image acquiring device 11 may store the acquired digital image in a storage device which is not shown.

The image display 12 generates image data for causing the display device 33 to display the digital image acquired in the image acquiring device 11. The image display 12 causes the digital image to be displayed such that a highlighted portion and a shaded portion of the displayed digital image can be designated. The image display 12 displays the highlighted portion and the shaded portion such that they can be designated, for example, by a user of the paint color specifying apparatus 1. For example, the user designates positions of the digital image displayed on the display device 33 by moving a cursor on the digital image displayed on the display device 33 using a mouse or a keyboard.

Positions designated in the present embodiment are two portions of a highlighted portion and a shaded portion in the digital image. The highlighted portion is a position in the digital image at which an angle of reflected light for incident light from a light source is considered to be close to an angle of regular reflection (reflection angle = 0°). A position of regular reflection is a position illuminated by a light source, at which an image has a highest brightness. The highlighted portion is a position close to the position of regular reflection, and a position at which a reflection angle is considered to be 15° is designated as a highlighted portion in the present embodiment. There are cases in which the chroma and hue of a reflective surface strongly affect incident light whereas the highlighted portion more correctly represents the hue of a paint color or the like of the reflective surface because the position of regular reflection is illuminated by the light sources. On the other hand, the shaded portion is a position in the digital image at which a reflection angle of reflected light for incident light from a light source is considered to be greater than a reflection angle = 45° (face). The shaded portion is a position at which the brightness of reflected light is low, and a position at which a reflection angle is considered to be 75° is designated as a shaded portion in the present embodiment. Further, the highlighted portion and the shaded portion designate different parts of a three-dimensional object painted with one color in the digital image.

Specifically, there is a case in which two or more objects may be present in one digital image. As an example, in an image in which a vehicle is present in a landscape (a still image or a background image), the landscape is one object and the vehicle is also one object. In such a case, a highlighted portion and a shaded portion of one object (e.g., a vehicle) are designated.

Further, when two or more paint colors are applied to an object (e.g., a vehicle), a highlighted portion and a shaded portion are designated from a part to which one of the two or more paint colors is applied.

Note that, the image display 12 may cause the highlighted portion and the shaded portion to be able to be designated for a program that analyzes the displayed digital image, for example, instead of being designated by a user. For example, the image display 12 may cause two points having different brightnesses within a predetermined range of color differences from colors included in the digital image to be selected as a highlighted portion and a shaded portion.

The color information acquiring device 13 acquires color information of the highlighted portion and the shaded portion designated in the digital image displayed through the image display 12. The color information acquiring device 13 acquires color information by averaging a predetermined range including the designated highlighted portion or the shaded portion. For example, when the position of the digital image displayed on the display device 33 is designated with a cross cursor, the color information acquiring device 13 averages color information of a rectangular region including a designated point. Since color information is different for pixels, color information may greatly vary even when a designated position is slightly deviated. The color information acquiring device 13 can reduce change in color information according to an acquired position by averaging color information within a predetermined range and thus can correctly acquire color information of a desired position. Further, the color information acquiring device 13 may display a rectangular or circular cursor on the display device 33, and average and acquire color information within a range surrounded by the cursor.

The hue change detector 14 detects change in the hues (color differences) of the color information of the highlighted portion and the color information of the shaded portion acquired in the color information acquiring device 13. Since the highlighted portion and the shaded portion correspond to brightnesses of reflected light at different reflection angles on the same painted surface in principle, as described above, if the highlighted portion and the shaded portion designated by a user are different painted images, for example, a correct paint color cannot be specified. When a color difference is greater than a predetermined value, the hue change detector 14 may determine that the user has designated an incorrect position and cause the display device 33 to display an error message for promoting re-designation of a position, for example,

The texture information selection display 15 causes the display device 33 to display texture information of paint colors such that texture information of paint colors can be selected. The texture of painting is words representing a paint color imaged by a car designer, for example. The texture of a paint color is represented, for example, by words such as "impression of shade," "metallic impression," "impression of transparency," "impression of depth," "three-dimensional effect (of particles)," "impression of chroma," "nuance," "solid tone," "calm color," "impression of fluidity" and "refreshing impression," There are cases in which these words of texture can more correctly express images of colors perceived by people compared to numerical values representing colors in a color space such as L*a*b* color system. In the present embodiment, a case in which a parameter indicating a texture using "impression of shade" representing the texture of a paint color as an example is selected will be described.

In general, a impression of shade can be represented by a brightness of a highlighted (IV), a brightness of a face (SV), and a contrast (FF) of IV and SV. The impression of shade can be expressed by the size of a numerical value of FF. IV and SV are numerical values that can be measured through a spectrophotometer.

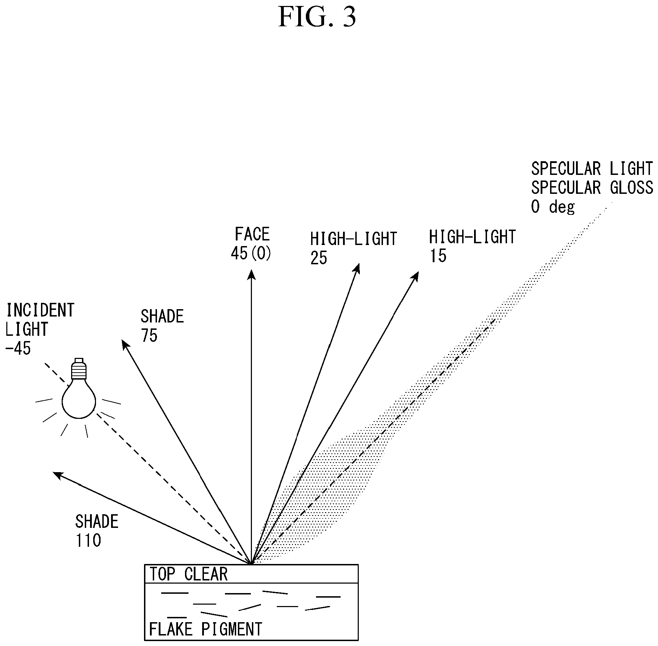

The spectrophotometer measures a spectral reflectance by measuring the intensity of reflected light from a painted surface in radiated light through a photodiode using monochromatic light every 10 nm in wavelengths of 400 to 700 nm, of a light source. The spectrophotometer measures intensity according to a light-receiving angle (reflection angle) of reflected light for incident light. Note that, a light-receiving angle in the spectrophotometer will be described in detail later using FIG. 3.

In the present embodiment, an impression of shade is described using IV68 and SV68 which are IV and SV measured through an MA68 spectrophotometer from X-Rite of the U.S., and FF68 calculated from IV68 and SV68. Here, FF68 is calculated in mathematical expression 1.

$$FF68 = 2 \times (IV68\text{-}SV68)/(IV68\text{+}SV68) \quad \text{(Mathematical expression 1)}$$

Here, IV68 is a brightness of a highlighted with a reflection angle of 15° and is represented by Y15 that is a measured value of a Y value in the XYZ and L*a*b* color system. In addition, SV68 is a brightness of a face with a reflection angle of 45° and is represented by a measured value Y45. That is, mathematical expression 1 is calculated through mathematical expression 2 using measured values of MA68.

$$FF68 = 2 \times (Y15\text{-}Y45)/(Y15\text{+}Y45) \quad \text{(Mathematical expression 2)}$$

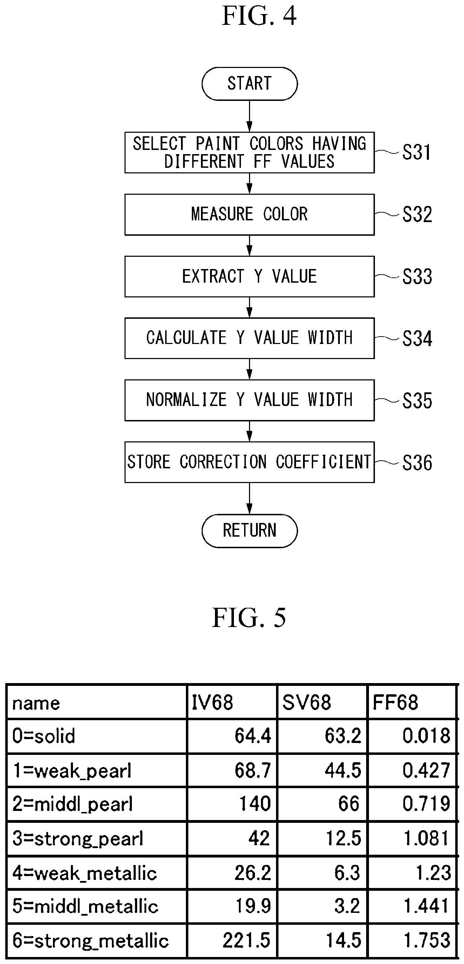

As shown in mathematical expression 2, FF68 which is a parameter representing an impression of shade increases as a difference between Y15 and Y45 increases and decreases as the difference between Y15 and Y45 decreases. In mathematical expression 2, FF68 is theoretically within a range of $0 \leq FF68 \leq 2$. The impression of shade becomes a solid tone as FF68 approaches 0 and becomes a metallic tone as FF68 approaches 2. The texture information selection display 15 displays texture information indicating the impression of shade having different numerical values of FF68 on the display device 33 such that the texture information can be selected. A user can select any internode information from the displayed texture information. Note that, texture information displayed by the texture information selection display 15 will be described in detail later using FIG. 5.

The texture information acquiring device acquires texture information selected by the user. The texture information acquiring device can acquire the selected texture information by detecting that the user has selected texture information displayed on the display device 33 by the texture information selection display 15 using a mouse or the like.

The correction coefficient storage 17 stores a plurality of preset combinations of texture information and correction coefficients corresponding thereto. A correction coefficient is a coefficient used when color characteristics are calculated in accordance with the color information of the highlighted portion and the color information of the shaded portion acquired in the color information acquiring device 13. The correction coefficient can be calculated by preparing paint colors having different numerical values of FF68 in advance and measuring a spectral reflectance at each angle in the prepared paint color using the spectrophotometer MA68. That is, a correction coefficient stored in the correction coefficient storage 17 can be calculated in accordance with an actually present paint color. Note that, a correction coefficient may be calculated by measuring V68 (Y15) and SV68 (Y45). A specific example of calculating a correction coefficient stored in the correction coefficient storage 17 will be described later using FIG. 5 or the like.

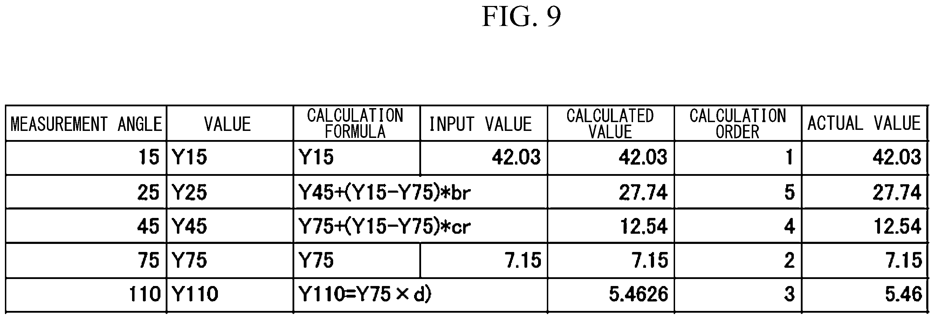

The color characteristic calculating device 18 calculates color characteristics of a paint color which are represented by change in the brightness of reflected light according to a reflection angle with respect to incident light using a correction coefficient corresponding to the texture information acquired in the texture information acquiring device 16 in accordance with the color information acquired in the color information acquiring device 13. The color information acquired in the color information acquiring device 13 is color information of two positions of the highlighted portion and the shaded portion designated in the digital image, as described above. Specifically, the color information of the highlighted portion is a brightness corresponding to Y15. In addition, the color information of the shaded portion is a brightness corresponding to Y75. The color characteristic calculating device 18 calculates color characteristics by calculating brightnesses of Y25, Y45 and Y110 in accordance with values of Y15 and Y75 acquired in the color information acquiring device 13. The color characteristic calculating device 18 calculates the brightnesses of Y25, Y45 and Y110 by reading a correction coefficient corresponding to texture information acquired in the texture information acquiring device 16 from the correction coefficient storage 17 and applying the correction coefficient to the values of Y15 and Y75. Note that, a specific example of calculating color characteristics will be described later using FIG. 9 or the like.

The sample characteristic storage 19 stores previously measured color characteristics of painted samples that have been painted with different paint colors. A painted sample is a sample obtained by painting an actual paint on a painted plate, for example, Painting of a painted plate is painting a formulated coloring paint on the painted plate, painting a clear paint thereon and drying the clear paint. Color characteristics of painted samples can be measured by a spectrophotometer. Color characteristics stored in the sample characteristic storage 19 are used for comparison with color characteristics calculated in the color characteristic calculating device 18. Accordingly, it is desirable that the color characteristics stored in the sample characteristic storage 19 include a parameter that is compared with at least color characteristics calculated in the color characteristic calculating device 18 in measured data measured by the spectrophotometer. Specifically, it is desirable that a parameter for calculating a color difference of one representative color (e.g., Y: green) in the XYZ color system, for example, be stored. To calculate a color difference, numerical values obtained by converting numerical values measured by the spectrophotometer into L*a*b* in representative colors are stored in the sample characteristic storage 19.

The paint color specifying device 20 specifies a paint color in accordance with the color characteristics calculated in the color characteristic calculating device 18. For example, the paint color specifying device 20 calculates a color difference between a representative color calculated in the color characteristic calculating device 18 and a representative color stored in the sample characteristic storage 19 and specifies is configured to specify a paint color having a minimum color difference. Calculation of a color difference can be performed according to color differences in the L*a*b* color system as described above. The paint color specifying device 20 may specify the paint color having a minimum color difference and a plurality of neighboring paint colors close to the paint color.

The paint color selection display 21 causes the display device 33 to display the paint color specified by the paint color specifying device 20 such that the paint color can be selected. In the case of the paint color having a minimum color difference specified by the paint color specifying device 20 and the plurality of neighboring paint colors thereof, the paint color selection display 21 causes the display device 33 to display the plurality of specified paint colors. By displaying the neighboring paint colors as variations and suggesting them to the user, the user can widen the image of paint colors to extend a range of design. The user can select one or a plurality of paint colors close to the image with respect to his own paint color from the displayed paint colors using a mouse or the like. Note that, variations of neighboring colors displayed in the paint color selection display 21 may be changed according to a taste of the user. For example, the paint color selection display 21 may display neighboring colors having color differences and FF values apart from the paint color having a minimum color difference when the image for the paint color needs to be extended and display neighboring colors having color differences and FF values close to the paint color having the minimum color difference when the image for the paint color has been determined.

The paint color information output device 22 outputs information regarding the paint color selected through the paint color selection display 21. The information regarding the paint color includes, for example, preparation data of the paint color, color characteristics (a graph of brightness change with respect to reflection angles, or the like) of the paint color, conditions when the paint color has been specified, and the like. The paint color information output device 22 outputs the information regarding the paint color to, for example, the display device 33, the printer 34, a recording medium which is not shown, a meter which measures paints, or the like. The paint color information output device 22 may store the information regarding the selected paint color in the paint color specifying apparatus 1.

The communication controller 23 controls communication through the network 9. For example, the communication controller 23 controls communication with the server 4 through the network 9.

Note that, a case in which the functions of the image acquiring device 11, the image display 12, the color information acquiring device 13, the hue change detector 14, the texture information selection display 15, the texture information acquiring device 16, the correction coefficient storage 17, the color characteristic calculating device 18, the sample characteristic storage 19, the paint color specifying device 20, the paint color selection display 21, the paint color information output device 22 and the communication controller 23 of the paint color specifying apparatus 1 in FIG. 1 are realized by software has been described. However, one or more of the aforementioned functions may be realized by hardware. In addition, one of the aforementioned functions may be divided into a plurality of functions and implemented. Further, two or more of the aforementioned functions may be integrated into one function and implemented. Although FIG. 1 exemplifies a system having two apparatuses for the paint color specifying apparatus 1 and the server 4, one or a plurality of functions of the paint color specifying apparatus 1 may be realized in other apparatuses such as the server 4. That is, the paint color specifying apparatus 1 shown in FIG. 1 is one aspect of an apparatus configuration and does not limit the configuration of the paint color specifying apparatus 1.

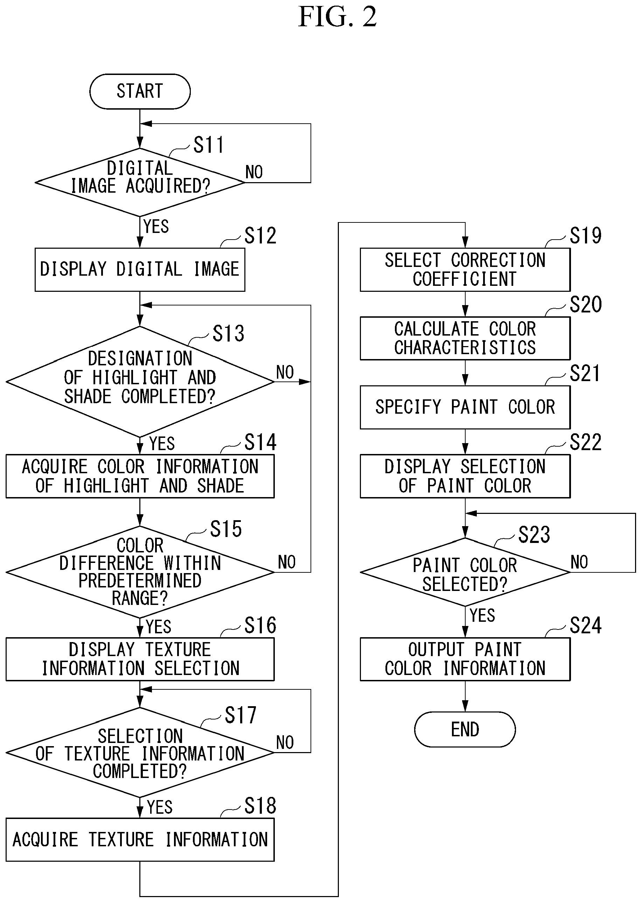

Next, the operation of the paint color specifying apparatus 1 will be described using FIG. 2. FIG. 2 is a flowchart showing an example of the operation of the paint color specifying apparatus in an embodiment. The operation of the paint color specifying apparatus 1 shown in the flowchart can be realized by executing the above-described paint color specifying program. A subject of the operation is the paint color specifying apparatus 1 in the following description.

In FIG. 2, the paint color specifying apparatus 1 determines whether a digital image has been acquired (step S11). Determination of whether a digital image has been acquired can be performed, for example, by the image acquiring device 11 determining whether scan data has been acquired from the scanner 31. If it is determined that a digital image has not been acquired (NO in step S11), the paint color specifying apparatus 1 repeats the process of step S11 and waits for acquisition of a digital image.

On the other hand, if it is determined that a digital image has been acquired (YES in step S11), the paint color specifying apparatus 1 displays the acquired digital image on the display device 33, for example, such that an operator of the paint color specifying apparatus 1 can designate a highlighted portion and a shaded portion in the same color (step S12). A plurality of digital images to be displayed may be provided. A digital image is a picture of a painted car, a landscape picture representing an image of painting, or the like. Particularly, it is possible to identify a paint painted on a photographed car by using a picture of the painted car.

After execution of the process of step S12, the paint color specifying apparatus 1 determines whether the operator has designated the highlighted portion and the shaded portion (step S13). In determination of whether the highlighted portion and the shaded portion have been designated, for example, it is possible to determine whether the operator has designated (has clicked) two positions of the highlighted portion and the shaded portion using a mouse or the like in the range of the digital image displayed on the display device 33. If it is determined that the highlighted portion and the shaded portion have not been designated (NO in step S13), the paint color specifying apparatus 1 repeats the process of step S13 and waits for completion of designation of the two positions.

On the other hand, if it is determined that the highlighted portion and the shaded portion have been designated (YES in step S13), the paint color specifying apparatus 1 acquires color information of the highlighted portion and the shaded portion.

The color information of the highlighted portion includes a brightness value corresponding to Y15 and the color information of the shaded portion includes a brightness value corresponding to Y75. The acquired color information is converted into L*a*b* in order to calculate a color difference.

After execution of the process of step S14, the paint color specifying apparatus 1 calculates a color difference between the highlighted portion and the shaded portion and determines whether the color difference falls within a predetermined range (step S15). It is possible to determine whether the color difference falls within the predetermined range by comparing L*a*b* of the highlighted portion and the shaded portion. If the color difference does not fall within the predetermined range, it is possible to assume that the highlighted portion and the shaded portion have been wrongly designated, such as a case in which objects painted with different colors have been designated or a case in which a portion that is not appropriate as the highlighted portion or the shaded portion has been designated. If it is determined that the color difference does not fall within the predetermined range (NO in step S15), the paint color specifying apparatus 1 returns to the process of step S13 such that the highlighted portion and the shaded portion can be designated again. Note that, the process of step S15 is an arbitrary process and the process of the next step may be performed without checking for wrong designation.

On the other hand, if it is determined that the color difference falls within the predetermined range (YES in step S15), the paint color specifying apparatus 1 displays texture information such that the texture information can be selected (step S16). It is assumed that words representing an impression of shade of a paint color are displayed as texture information in the present embodiment.

After execution of the process of step 16, the paint color specifying apparatus 1 determines whether texture information has been selected (step S17). It is possible to determine whether texture information has been selected, for example, by determining whether a user has selected texture information displayed on the display device 33 using a mouse or the like. If it is determined that texture information has not been selected (NO in step S17), the paint color specifying apparatus 1 repeats the process of step S17 and waits for completion of selection of texture information.

On the other hand, if it is determined that texture information has been selected (YES in step S17), the paint color specifying apparatus 1 acquires the selected texture information (step S18).

After execution of the process of step S18, the paint color specifying apparatus 1 selects a correction coefficient in accordance with the selected texture information (step S19). The correction coefficient corresponds to texture information and is prepared in advance. The correction coefficient is stored in advance, for example, in the correction coefficient storage 17 such that it can be read corresponding to the texture information.

After execution of the process of step S19, the paint color specifying apparatus 1 calculates color characteristics (step S20). Calculation of color characteristics can be performed in such a manner that color characteristics represented by Y15 to Y110 are calculated by applying the selected correction coefficient to the color information Y15 of the highlighted portion and the color information Y75 of the shaded portion to calculate Y25, Y45 and Y110.

After execution of the process of step S20, the paint color specifying apparatus 1 specifies paint colors in accordance with the calculated color characteristics (step S21). For example, paint colors can be specified by calculating color differences between the calculated color characteristics and color characteristics of painted samples stored in advance in the sample characteristic storage 19 and identifying a paint color having a minimum color difference and neighboring paint colors thereof. Calculation of color differences is performed in one representative color of paint colors. Since paint colors are specified in a color design process for suggesting a paint color imaged by the user in the present embodiment, it is not necessary to perform computer-aided toning using chromaticity values obtained from a picture to make paint colors correspond to each other as in repairing of painting of a car. Accordingly, there is no problem even if paint colors are specified simply by obtaining a color difference in a representative color of paint colors, and it is desirable to specify a plurality of paint colors including neighboring colors and suggest selection of a paint color to the user.

After execution of the process of step S21, the paint color specifying apparatus 1 displays the specified paint colors such that they can be selected (step S22). For example, display of specified paint colors may be performed in such a manner that the display device 33 arranges the paint colors in order from a paint color having a small color difference and displays the paint colors. Paint colors to be displayed may be displayed in gradation having different brightnesses according to reflection angles. Note that, since the colors of paint colors to be displayed on the display device 33 are affected by color spaces and display characteristics which can be displayed in the display device 33, the paint colors to be displayed may be displayed after color calibration fitted to the display device 33 is performed thereon.

After execution of the process of step S22, the paint color specifying apparatus 1 determines whether a paint color has been selected (step S23). For example, it can be determined whether a paint color has been selected by detecting whether the user has selected one or a plurality of paint colors from the plurality of paint colors displayed on the display device 33 using a mouse or the like. If it is determined that no paint color has been selected (NO in step S23), the paint color specifying apparatus 1 repeats the process of step S23 and waits for selection of a paint color.

On the other hand, if it is determined that a paint color has been selected (YES in step S23), the paint color specifying apparatus 1 outputs paint color information on the selected paint color (step S24). The paint color specifying apparatus 1 outputs the information on the paint color, for example, to the display device 33, the printer 34, or the like. After execution of the process of step S24, the paint color specifying apparatus 1 ends the process of the shown flowchart.

Next, a relationship between incident light and reflection angles of reflected light will be described using FIG. 3. FIG. 3 is a diagram showing an example of a relationship between incident light and reflection angles of reflected light in the paint color specifying apparatus in an embodiment.

In FIG. 3, when the direction perpendicular to a painted surface is assumed to be 0°, incident light enters in a direction of -45° with respect to the perpendicular direction. The incident light is reflected on the painted surface to become reflected light. FIG. 3 shows that a paint contains a metallic flake pigment and a clear layer is provided on the painted surface. The paint containing the metallic flake pigment is a paint color having a strong impression of shade (a large FF value) in general.

When the direction perpendicular to a painted surface is assumed to be 0°, reflection in the direction of 45° with respect to the direction perpendicular to the painted surface with respect to incident light is referred to as specular and reflected light of specular is referred to as specular light. The reflection angle of the specular light is 0°. A reflection angle is an angle in a direction from specular light to incident light, and reflection at a reflection angle in the range of 0° to 40° is referred to as a highlight. Highlights measured through a spectrophotometer in the present embodiment are reflected lights at reflection angles of 15° and 25°. Reflection at a reflection angle of 45° is referred to as a face. The reflection angle of 45° is consistent with the direction perpendicular to the painted surface. Reflection at a reflection angle in the range of 45° to 135° is referred to as a shade. Shades measured through a spectrophotometer in the present embodiment are reflected lights at reflection angles of 75° and 110°. The brightness of reflected light decreases as the reflection angle increases with respect to any paint color. That is, change in a brightness with respect to a reflection angle becomes characteristics that the brightness constantly decreases for increase in the reflection angle. Note that, a reflection angle is a light-receiving angle in a spectrophotometer. A light source of the spectrophotometer may use wavelengths of an infrared region or an ultraviolet region instead of using wavelengths of a visible region.

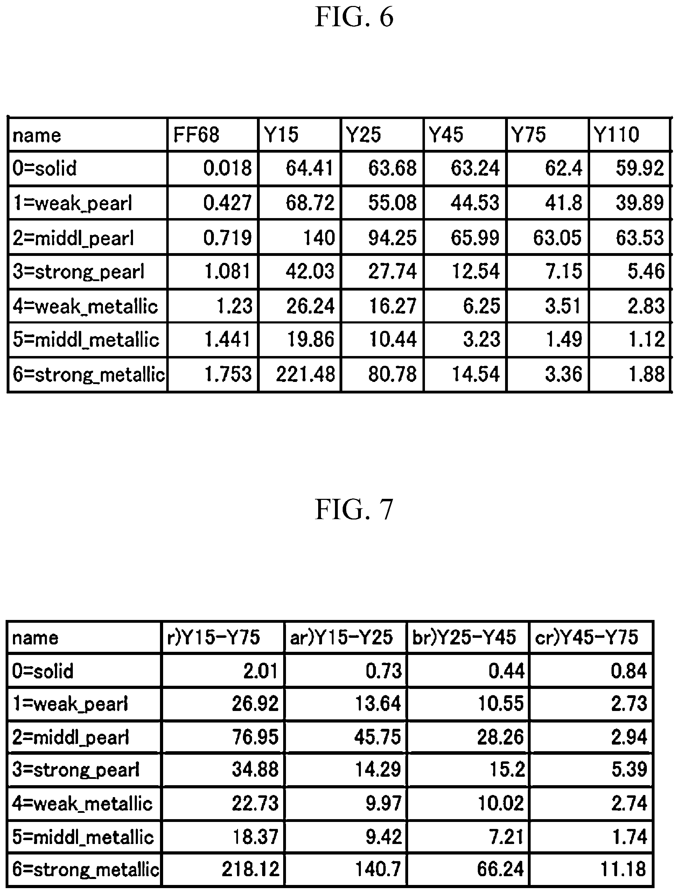

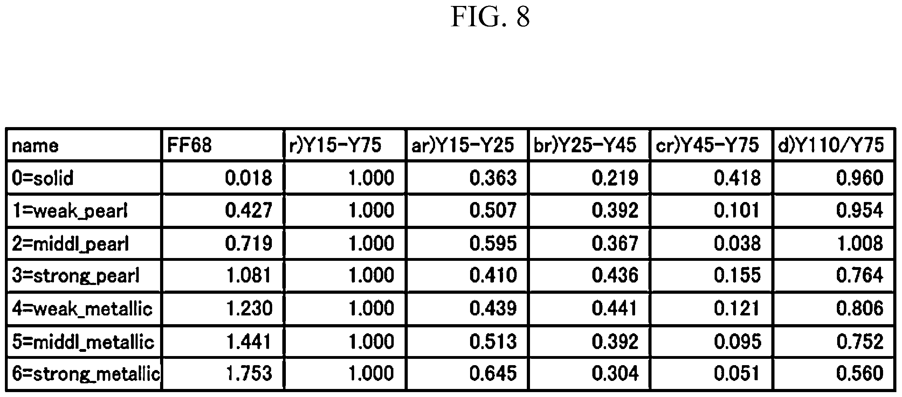

Next, a method of calculating a correction coefficient will be described using FIGS. 4 to 8. FIG. 4 is a flowchart showing an example of a method of calculating a correction coefficient used in the painting specifying apparatus in an embodiment. FIG. 5 is a diagram showing an example of paint colors corresponding to texture of painting selected to calculate a correction coefficient used in the painting specifying apparatus in an embodiment. FIGS. 6 and 7 are diagrams showing an example of the method of calculating a correction coefficient used in the painting specifying apparatus in an embodiment. FIG. 8 is a diagram showing an example of results of calculation of a correction coefficient used in the painting specifying apparatus in an embodiment.

Correction coefficients are calculated in advance and stored in the correction coefficient storage 17 as described above. Accordingly, a correction coefficient used in the paint color specifying apparatus 1 may be calculated in the paint color specifying apparatus 1 or calculated in other apparatuses. In the following description, the subject of calculation of a correction coefficient is not specified.

In FIG. 4, first, a plurality of paint colors having different FF values are selected (step S31). An FF value is calculated according to a difference between the brightness of a highlight and the brightness of a shade as described in mathematical expression 1 or 2. A paint color having a large FF value has a strong impression of shade and a paint color having a small FF value has a weak impression of shade.

It is desirable to select a plurality of paint colors in which FF values gradually change (impression of shadow gradually change) for calculation of a correction coefficient. In the present embodiment, paint colors are selected in accordance with words expressing an impression of shade exemplified as texture information. Further, paint colors may be automatically selected from samples stored in the sample characteristic storage 19 or manually selected by the user while checking FF values.

Selected paint colors are shown in FIG. 5. FIG. 5 has data items of "name," "IV68," "SV68" and "FF68." The data item of "name" is texture information representing an impression of shade. An impression of shade is expressed by seven kinds of words of "solid," "weak_pearl," "middle_pearl," "strong_pearl," "weak-metallic," "middle-metallic," and "strong_metallic," for example. Each selected paint color has values of IV68 and SV68, and FF68 is calculated from the values of IV68 and SV68 according to mathematical expression 1. "Solid" has a smallest FF value of "0.018" and paint colors in which FF values gradually increase, such as "weak_pearl" = "0.427" and "middle_pearl" = "0.719," are selected.

Note that, the seven kinds of words of "solid" to "strong_metallic" are displayed by the texture information selection display 15 of FIG. 1 such that they can be selected and are an example of texture information acquired by the texture information acquiring device 16.

Referring back to description of FIG. 4, after execution of the process of step S31, samples of the selected paint colors are measured using a spectrophotometer (step S32). Here, brightnesses of the samples are measured for each reflection angle. After execution of the process of step S31, a Y value (brightness) is extracted from measured values of the spectrophotometer (step S33). The Y value from tristimulus values of XYZ is used in the present embodiment. This is because it is known that the Y value increases or decreases in substantially proportion to an impression of shade. Note that, the X value or the Z value may be used instead of the Y value. The X value or the Z value increases or decreases in response to a reflection angle. Hue change according to a reflection angle difference is small, and saturation in a shaded portion is low. A measurement result of the Y value extracted in the process of step S33 is shown in FIG. 6.

FIG. 6 has data items of "name," "Y15," "Y25," "Y45," "Y75" and "Y110." "Y15," "Y25," "Y45," "Y75" and "Y110" are measured value of five angles measured through spectrophotometer MA68. Further, wavelengths used in the spectrophotometer are, for example, are wavelengths of every 10 nm from 400 nm to 700 nm, and a brightness is measured in each wavelength.

Referring back to description of FIG. 4, after execution of the process of step S33, the width of the Y value according to reflection angles is calculated (step S34). The width of the Y value is a difference of the Y value according to reflection angles. The calculated width of the Y value is shown in FIG. 7.

FIG. 7 has data items of "name," "r(Y15-Y75)," "ar(Y15-Y25)," "br(Y25-Y45)" and "cr(Y45-Y75)." For example, "r(Y15-Y75)" represents a difference (width) between Y15 and Y75. Similarly, "ar(Y15-Y25)" represents a difference (width) between Y15 and Y25, "br(Y25-Y45)" represents a difference (width) between Y25 and Y45, and "cr(Y45-Y75)" represents a difference (width) between Y45 and Y75. That is, the data items shown in FIG. 7 are calculated in accordance with the data shown in FIG. 6.

Referring back to description of FIG. 4, after execution of the process of step S34, the width (difference) of the Y value is normalized (step S35). Normalization of the width of the Y value is modification of the Y value at each reflection angle when the value of "r(Y15-Y75)" is set to "1." Results of normalization of the widths of Y values shown in FIG. 7 are shown in FIG. 8.

FIG. 8 has data items of "name," "FF68," "r(Y15-Y75)," "ar(Y15-Y25)," "br(Y25-Y45)." "cr(Y45-Y75)" and "d(Y110/Y75)." In FIG. 8, "r(Y15-Y75)" becomes "1" in each piece of texture information and values of each data item are modified in proportion to this. Accordingly, a Y value difference in each piece of texture information is normalized. The data item of "d(Y1101Y75)" represents Y110 and Y75, that is, a magnitude of brightness change in a shaded portion.

The normalized widths of the Y values shown in FIG. 8 are stored in the correction coefficient storage 17 as correction coefficients, read by the color characteristic calculating device 18 and used to calculate color characteristics.

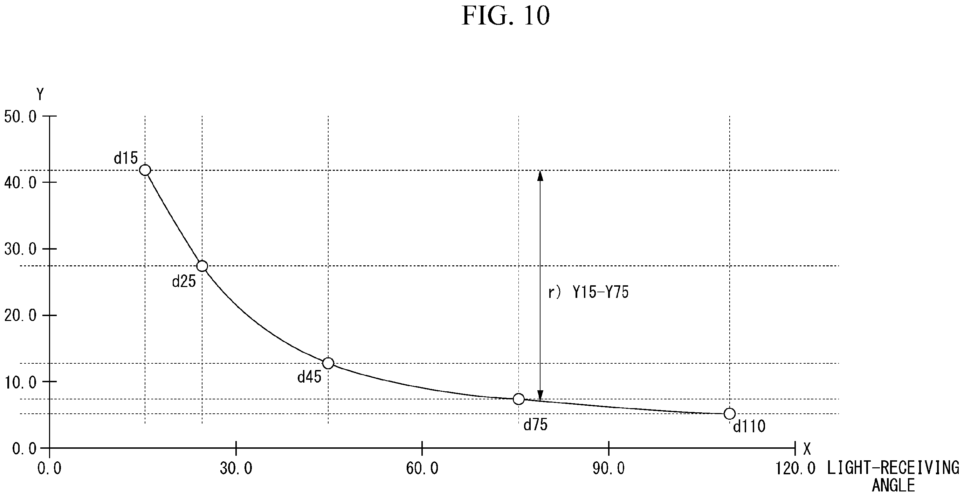

Next, a method of calculating color characteristics will be described using FIGS. 9 and 10. FIG. 9 is a diagram showing an example of color characteristics calculated in the painting specifying apparatus in an embodiment. FIG. 10 is a graph showing an example of color characteristics calculated in the painting specifying apparatus in an embodiment.

FIG. 9 has data items of "measurement angle," "value," "calculation formula," "input value," "calculated value," "calculation order" and "actual value."

The data item of "measurement angle" is a measurement angle in a spectrophotometer and is the same as a reflection angle.

The data item of "value" includes items of Y values of "Y15" to "Y110" for measurement angles.

The data item of "calculation formula" includes a calculation formula for calculating, from a highlighted portion Y15 and a shaded portion Y75 designated from a digital image, other three angles. For example, Y25 is calculated through formula 3.

$$Y25 = Y45 + (Y15-Y75) \times br \qquad \text{(Formula 3)}$$

In addition, Y45 is calculated through formula 4.

$$Y45 = Y75 + (Y15-Y75) \times cr \qquad \text{(Formula 4)}$$

Further, Y110 is calculated through formula 5.

$$Y110 = Y75 \times d \qquad \text{(Formula 5)}$$

In formulas 3 to 5, Y15 and Y75 are known values because they are numerical values designated from a digital image. Y110 is calculated from Y75 that is known, ar, br and d are correction coefficients "ar(Y15-Y25)," "br(Y25-Y45)" and "d(Y110/Y75)" described in FIG. 8. Y45 is calculated when Y110 is calculated and Y25 is calculated when Y45 is calculated. The data item of "calculation order" indicates a calculation order of these Y values.

In FIG. 9, when an input value of Y15 is "42.03" and an input value of Y75 is "7.15," Y25, Y45 and Y110 can be calculated as shown.

Further, "actual value" is a measured value obtained by measuring painting that is original data of a digital image through a spectrophotometer and is shown for comparison with Y15 and Y75, and Y25, Y45 and Y110 obtained from a correction coefficient. A calculated Y value indicates almost the same value as a measured Y value, which represents that calculation of color characteristics in the present embodiment is correct. That is, it is possible to specify a paint color of a car using a digital image obtained by photographing the actual car, for example.

FIG. 10 shows a transition of a Y value in accordance with a light-receiving angle described with reference to FIG. 9 as a graph. In the present embodiments, it is possible to reproduce smooth color characteristics as in a case in which a paint color is measured through a spectrophotometer by designating two points (highlighted portion and shaded portion) of a digital image.

The above-described paint color specifying apparatus of the invention can easily specify a paint color desired by a client from a digital image by including: an image display which causes a display device to display a digital image such that a highlighted portion and a shaded portion of the digital image are able to be designated; a color information acquiring device which acquires color information of the designated highlighted portion and shaded portion; a texture information selection display which causes the display device to display texture information of paint colors such that texture information of a paint color is selectable; a texture information acquiring device which acquires the selected texture information; a color characteristic calculating device which uses a correction coefficient corresponding to the acquired texture information in accordance with the acquired color information and thereby calculates color characteristics of a paint color represented by change in brightness of reflected light according to a reflection angle with respect to incident light; and a paint color specifying device which specifies a paint color in accordance with the calculated color characteristics. The color characteristic calculating device calculates color characteristics approximating a curve along which the brightness constantly decreases for increase in the reflection angle from the highlighted portion to the shaded portion.

Note that, it is desirable that the above-described paint color specifying apparatus be an apparatus having the above-described functions, and the paint color specifying apparatus may be realized by, for example, a system configured as a combination of a plurality of apparatuses which are connected such that they can communicate. In addition, the paint color specifying apparatus may be realized as a part of functions of another apparatus,

Furthermore, an execution order of the steps in the paint color specifying method of the present embodiment may be any order.

Further, the above-described various processes of the present embodiment may be performed by recording a program for realizing functions constituting the apparatus described in the present embodiment on a computer-readable recording medium (computer-readable medium) and causing a computer system to read and execute the program recorded on the recording medium. Note that, here, the "computer system" may include an OS and hardware such as peripheral apparatuses. In addition, if a WWW system is used, it is assumed that the "computer system" includes a home-page providing environment (or a display environment). Further, the "computer-readable recording medium" refers to a writable non-volatile memory such as a flexible disk, a magneto-optic disk, a ROM or a flash memory, a portable medium such as a CD-ROM, or a storage device such as a hard disk embedded in a computer system.

Further, the "computer-readable recording medium" may also include a medium which stores a program for a specific time such as a volatile memory (e.g., a dynamic random access memory (DRAM)) in a computer system which is a server or a client when a program is transmitted through a network such as the Internet or a communication circuit such as a telephone circuit. In addition, the aforementioned program may be transmitted from a computer system in which this program is stored in a storage device or the like to other computer systems through a transmission medium or according to transmitted waves in a transmission medium. Here, the "transmission medium" for transmitting the program refers to a medium having a function of transmitting information, such as a network (communication network) such as the Internet or a communication circuit (communication line) such as a telephone circuit. Moreover, the aforementioned program may be a program for realizing a part of the aforementioned functions. Further, the program may be a so-called difference file (difference program) which can realize the above-described functions according to combination with a program which has already been recorded in a computer system.

Although embodiments of the invention have been described with reference to the drawings, specific configurations are not limited to these embodiments and include various modifications within the scope of the appended claims.

DESCRIPTION OF REFERENCE NUMERAL

1 Paint color specifying apparatus
11 Image acquiring device
12 Image display
13 Color information acquiring device
14 Hue change detector
15 Texture information selection display
16 Texture information acquiring device
17 Correction coefficient storage
18 Color characteristic calculating device
19 Sample characteristic storage
20 Paint color specifying device
21 Paint color selection display
22 Paint color information output device
23 Communication controller
31 Scanner
32 Input device
33 Display device
34 Printer
4 Server
9 Network

**Claims**

1. A paint color specifying apparatus comprising:

    an image display (12) configured to cause a display device (33) to display a digital image such that a highlighted portion and a shaded portion of the digital image are able to be designated;
    a color information acquiring device (13) configured to acquire color information of the designated highlighted portion and shaded portion;
    a texture information selection display (15) configured to cause the display device (33) to display texture information of paint colors such that texture information of a paint color is selectable;
    a texture information acquiring device (16) configured to acquire the selected texture information;
    a paint color specifying device (20); and
    a color characteristic calculating device (18) configured to use a correction coefficient corresponding to the acquired texture information in accordance with the acquired color information and to thereby calculate color characteristics of a paint color represented by change in brightness of reflected light according to a reflection angle with respect to incident light,
    wherein the paint color specifying device (20) is configured to specify a paint color in accordance with the calculated color characteristics, and
    wherein the paint color specifying apparatus is **characterized in that** the color characteristic calculating device (18) is configured to calculate color characteristics approximating a curve along which the brightness constantly decreases for increase in the reflection angle from the highlighted portion to the shaded portion.

2. The paint color specifying apparatus according to claim 1, wherein the texture information selection display (15) is configured to display words of an impression of shade of a paint color which represent change in the brightness according to the reflection angle such that the words are selectable as the texture information.

3. The paint color specifying apparatus according to claim 1 or 2, wherein the color information acquiring device (13) is configured to acquire the color information by averaging a predetermined range including the designated highlighted portion or shaded portion.

4. The paint color specifying apparatus according to any one of claims 1 to 3, further comprising:

a correction coefficient storage (17) configured to store a plurality of preset combinations in which the texture information corresponds to the correction coefficient, wherein
the color characteristic calculating device (18) is configured to select the correction coefficient corresponding to the acquired texture information from the stored combinations and
to thereby use the correction coefficient for calculation of the color characteristics.

5. The paint color specifying apparatus according to any one of claims 1 to 4, further comprising:

a sample characteristic storage (19) configured to store previously measured color characteristics of painting samples painted with different paint colors, wherein
the paint color specifying device (20) is configured to specify the paint color in accordance with color characteristic comparison between the stored color characteristics and the calculated color characteristics.

6. The paint color specifying apparatus according to claim 5, wherein the paint color specifying device (20) is configured to specify a paint color approximating the color characteristics in accordance with comparison between the color characteristics.

7. The paint color specifying apparatus according to any one of claims 1 to 6, further comprising:
a paint color selection display (21) configured to cause the display device (33) to display the specified paint color such that the paint color is selectable.

8. The paint color specifying apparatus according to any one of claims 1 to 7, further comprising: a hue change detector (14) configured to detect hue change in the acquired color information of the highlighted portion and color information of the shaded portion.

9. A paint color specifying method comprising:

an image display step of causing a display device (33) to display a digital image such that a highlighted portion and a shaded portion of the digital image are able to be designated;
a color information acquisition step of acquiring color information of the designated highlighted portion and shaded portion;
a texture information selection display step of causing the display device (33) to display texture information of paint colors such that texture information of a paint color is selectable;
a texture information acquisition step of acquiring the selected texture information;
a paint color specifying step of specifying a paint color; and
a color characteristic calculation step of using a correction coefficient corresponding to the acquired texture information in accordance with the acquired color information and thereby calculating color characteristics of a paint color represented by change in brightness of reflected light according to a reflection angle with respect to incident light,
wherein the paint color specifying step specifies the paint color in accordance with the calculated color characteristics, wherein the paint color specifying method is **characterized in that**, in the color characteristic calculation step, color characteristics approximating a curve along which the brightness constantly decreases for increase in the reflection angle from the highlighted portion to the shaded portion are calculated.

10. A paint color specifying computer program comprising instructions which, when the program is executed by a computer, cause the computer to carry out:

an image display process of causing a display device (33) to display a digital image such that a highlighted portion and a shaded portion of the digital image are able to be designated;
a color information acquisition process of acquiring color information of the designated highlighted portion and shaded portion;
a texture information selection display process of causing the display device (33) to display texture information of paint colors such that texture information of a paint color is selectable;
a texture information acquisition process of acquiring the selected texture information;
a paint color specifying process of specifying a paint color; and
a color characteristic calculation process of using a correction coefficient corresponding to the acquired texture information in accordance with the acquired color information and thereby calculating color characteristics of a paint color represented by change in brightness of reflected light according to a reflection angle with respect to incident light,

wherein the paint color specifying process specifies the paint color in accordance with the calculated color characteristics, and

wherein the paint color specifying computer program is **characterized in that**, in the color characteristic calculation process, color characteristics approximating a curve along which the brightness constantly decreases for increase in the reflection angle from the highlighted portion to the shaded portion are calculated.

**11.** A computer-readable medium comprising instructions which, when executed by a computer, cause the computer to carry out:

an image display process of causing a display device (33) to display a digital image such that a highlighted portion and a shaded portion of the digital image are able to be designated;

a color information acquisition process of acquiring color information of the designated highlighted portion and shaded portion;

a texture information selection display process of causing the display device (33) to display texture information of paint colors such that texture information of a paint color is selectable;

a texture information acquisition process of acquiring the selected texture information;

a paint color specifying process of specifying a paint color; and

a color characteristic calculation process of using a correction coefficient corresponding to the acquired texture information in accordance with the acquired color information and thereby calculating color characteristics of a paint color represented by change in brightness of reflected light according to a reflection angle with respect to incident light,

wherein the paint color specifying process specifies the paint color in accordance with the calculated color characteristics, and

wherein the computer-readable medium is **characterized in that**, in the color characteristic calculation process, color characteristics approximating a curve along which the brightness constantly decreases for increase in the reflection angle from the highlighted portion to the shaded portion are calculated.

## Patentansprüche

**1.** Ein Anstrichfarbspezifizierungsgerät, das folgende Merkmale aufweist:

eine Bildanzeige (12), die dazu ausgebildet ist, zu bewirken, dass eine Anzeigevorrichtung (33) ein digitales Bild derart anzeigt, dass ein hervorgehobener Abschnitt und ein schattierter Abschnitt des digitalen Bildes bezeichnet werden können;

eine Farbinformationserfassungsvorrichtung (13), die dazu ausgebildet ist, Farbinformationen des bezeichneten hervorgehobenen Abschnitts und schattierten Abschnitts zu erfassen;

eine Texturinformationsauswahlanzeige (15), die dazu ausgebildet ist, zu bewirken, dass die Anzeigevorrichtung (33) Texturinformationen von Anstrichfarben derart anzeigt, dass Texturinformationen einer Anstrichfarbe auswählbar sind;

eine Texturinformationserfassungsvorrichtung (16), die dazu ausgebildet ist, die ausgewählten Texturinformationen zu erfassen;

eine Anstrichfarbspezifizierungsvorrichtung (20); und

eine Farbcharakteristikberechnungsvorrichtung (18), die dazu ausgebildet ist, einen Korrekturkoeffizienten, der den erfassten Texturinformationen entspricht, gemäß den erfassten Farbinformationen zu verwenden und dadurch Farbcharakteristika einer Anstrichfarbe zu berechnen, die dargestellt werden durch eine Helligkeitsänderung reflektierten Lichts gemäß einem Reflexionswinkel in Bezug auf einfallendes Licht,

wobei die Anstrichfarbspezifizierungsvorrichtung (20) dazu ausgebildet ist, eine Anstrichfarbe gemäß den berechneten Farbcharakteristika zu spezifizieren, und

wobei das Anstrichfarbspezifizierungsgerät **dadurch gekennzeichnet ist, dass** die Farbcharakteristikberechnungsvorrichtung (18) dazu ausgebildet ist, Farbcharakteristika zu berechnen, die sich einer Kurve annähern, entlang der die Helligkeit konstant abnimmt, für einen Anstieg bei dem Reflexionswinkel von dem hervorgehobenen Abschnitt zu dem schattierten Abschnitt.

**2.** Das Anstrichfarbspezifizierungsgerät gemäß Anspruch 1, bei dem die Texturinformationsauswahlanzeige (15) dazu ausgebildet ist, Wörter eines Abdrucks einer Schattierung einer Anstrichfarbe anzuzeigen, die eine Änderung der Helligkeit gemäß dem Reflexionswinkel darstellen, derart, dass die Wörter als Texturinformationen auswählbar sind.

3. Das Anstrichfarbspezifizierungsgerät gemäß Anspruch 1 oder 2, bei dem
die Farbinformationserfassungsvorrichtung (13) dazu ausgebildet ist, die Farbinformationen zu erfassen durch Mitteln eines vorbestimmten Bereichs, der den bezeichneten hervorgehobenen Abschnitt oder schattierten Abschnitt aufweist.

4. Das Anstrichfarbspezifizierungsgerät gemäß einem der Ansprüche 1 bis 3, das ferner folgendes Merkmal aufweist:

    einen Korrekturkoeffizientenspeicher (17), der dazu ausgebildet ist, eine Mehrzahl voreingestellter Kombinationen zu speichern, bei denen die Texturinformationen dem Korrekturkoeffizienten entsprechen, wobei die Farbcharakteristikberechnungsvorrichtung (18) dazu ausgebildet ist, den Korrekturkoeffizienten, der den erfassten Texturinformationen entspricht, aus den gespeicherten Kombinationen auszuwählen und dadurch den Korrekturkoeffizienten zur Berechnung der Farbcharakteristika zu verwenden.

5. Das Anstrichfarbspezifizierungsgerät gemäß einem der Ansprüche 1 bis 4, das ferner folgendes Merkmal aufweist:

    einen Probecharakteristikspeicher (19), der dazu ausgebildet ist, zuvor gemessene Farbcharakteristika von Anstrichproben zu speichern, die mit unterschiedlichen Anstrichfarben gestrichen sind, wobei die Anstrichfarbspezifizierungsvorrichtung (20) dazu ausgebildet ist, die Anstrichfarbe gemäß einem Farbcharakteristikvergleich zwischen den gespeicherten Farbcharakteristika und den berechneten Farbcharakteristika zu spezifizieren.

6. Das Anstrichfarbspezifizierungsgerät gemäß Anspruch 5, bei dem
die Anstrichfarbspezifizierungsvorrichtung (20) dazu ausgebildet ist, eine Anstrichfarbe, die sich den Farbcharakteristika annähert, gemäß einem Vergleich zwischen den Farbcharakteristika zu spezifizieren.

7. Das Anstrichfarbspezifizierungsgerät gemäß einem der Ansprüche 1 bis 6, das ferner folgendes Merkmal aufweist:
eine Anstrichfarbauswahlanzeige (21), die dazu ausgebildet ist, zu bewirken, dass die Anzeigevorrichtung (33) die spezifizierte Anstrichfarbe derart anzeigt, dass die Anstrichfarbe auswählbar ist.

8. Das Anstrichfarbspezifizierungsgerät gemäß einem der Ansprüche 1 bis 7, das ferner folgendes Merkmal aufweist:
einen Farbtonänderungsdetektor (14), der dazu ausgebildet ist, eine Farbtonänderung an den erfassten Farbinformationen des hervorgehobenen Abschnitts und Farbinformationen des schattierten Abschnitts zu detektieren.

9. Ein Anstrichfarbspezifizierungsverfahren, das folgende Schritte aufweist:

    einen Bildanzeigeschritt eines Bewirkens, dass eine Anzeigevorrichtung (33) ein digitales Bild derart anzeigt, dass ein hervorgehobener Abschnitt und ein schattierter Abschnitt des digitalen Bildes bezeichnet werden können;
    einen Farbinformationserfassungsschritt eines Erfassens von Farbinformationen des bezeichneten hervorgehobenen Abschnitts und schattierten Abschnitts;
    einen Texturinformationsauswahlanzeigeschritt eines Bewirkens, dass die Anzeigevorrichtung (33) Texturinformationen von Anstrichfarben derart anzeigt, dass Texturinformationen einer Anstrichfarbe auswählbar sind;
    einen Texturinformationserfassungsschritt eines Erfassens der ausgewählten Texturinformationen;
    einen Anstrichfarbspezifizierungsschritt eines Spezifizierens einer Anstrichfarbe; und
    einen Farbcharakteristikberechnungsschritt eines Verwendens eines Korrekturkoeffizienten, der den erfassten Texturinformationen entspricht, gemäß den erfassten Farbinformationen und dadurch Berechnens von Farbcharakteristika einer Anstrichfarbe, die dargestellt werden durch eine Helligkeitsänderung reflektierten Lichts gemäß einem Reflexionswinkel in Bezug auf einfallendes Licht,
    wobei der Anstrichfarbspezifizierungsschritt die Anstrichfarbe gemäß den berechneten Farbcharakteristika spezifiziert,
    wobei das Anstrichfarbspezifizierungsverfahren **dadurch gekennzeichnet ist, dass** bei dem Farbcharakteristikberechnungsschritt Farbcharakteristika berechnet werden, die sich einer Kurve annähern, entlang der die Helligkeit konstant abnimmt, für einen Anstieg bei dem Reflexionswinkel von dem hervorgehobenen Abschnitt zu dem schattierten Abschnitt.

10. Ein Anstrichfarbspezifizierungs-Computerprogramm, das Befehle aufweist, die, wenn das Programm durch einen Computer ausgeführt wird, bewirken, dass der Computer Folgendes ausführt:

einen Bildanzeigevorgang eines Bewirkens, dass eine Anzeigevorrichtung (33) ein digitales Bild derart anzeigt, dass ein hervorgehobener Abschnitt und ein schattierter Abschnitt des digitalen Bildes bezeichnet werden können;

einen Farbinformationserfassungsvorgang eines Erfassens von Farbinformationen des bezeichneten hervorgehobenen Abschnitts und schattierten Abschnitts;

einen Texturinformationsauswahlanzeigevorgang eines Bewirkens, dass die Anzeigevorrichtung (33) Texturinformationen von Anstrichfarben derart anzeigt, dass Texturinformationen einer Anstrichfarbe auswählbar sind;

einen Texturinformationserfassungsvorgang eines Erfassens der ausgewählten Texturinformationen;

einen Anstrichfarbspezifizierungsvorgang eines Spezifizierens einer Anstrichfarbe; und

einen Farbcharakteristikberechnungsvorgang eines Verwendens eines Korrekturkoeffizienten, der den erfassten Texturinformationen entspricht, gemäß den erfassten Farbinformationen und dadurch Berechnens von Farbcharakteristika einer Anstrichfarbe, die dargestellt werden durch eine Helligkeitsänderung reflektierten Lichts gemäß einem Reflexionswinkel in Bezug auf einfallendes Licht,

wobei der Anstrichfarbspezifizierungsvorgang die Anstrichfarbe gemäß den berechneten Farbcharakteristika spezifiziert, und

wobei das Anstrichfarbspezifizierungs-Computerprogramm **dadurch gekennzeichnet ist, dass** bei dem Farbcharakteristikberechnungsvorgang Farbcharakteristika berechnet werden, die sich einer Kurve annähern, entlang der die Helligkeit konstant abnimmt, für einen Anstieg bei dem Reflexionswinkel von dem hervorgehobenen Abschnitt zu dem schattierten Abschnitt.

11. Ein computerlesbares Medium, das Befehle aufweist, die, wenn sie durch einen Computer ausgeführt werden, bewirken, dass der Computer Folgendes ausführt:

einen Bildanzeigevorgang eines Bewirkens, dass eine Anzeigevorrichtung (33) ein digitales Bild derart anzeigt, dass ein hervorgehobener Abschnitt und ein schattierter Abschnitt des digitalen Bildes bezeichnet werden können;

einen Farbinformationserfassungsvorgang eines Erfassens von Farbinformationen des bezeichneten hervorgehobenen Abschnitts und schattierten Abschnitts;

einen Texturinformationsauswahlanzeigevorgang eines Bewirkens, dass die Anzeigevorrichtung (33) Texturinformationen von Anstrichfarben derart anzeigt, dass Texturinformationen einer Anstrichfarbe auswählbar sind;

einen Texturinformationserfassungsvorgang eines Erfassens der ausgewählten Texturinformationen;

einen Anstrichfarbspezifizierungsvorgang eines Spezifizierens einer Anstrichfarbe; und

einen Farbcharakteristikberechnungsvorgang eines Verwendens eines Korrekturkoeffizienten, der den erfassten Texturinformationen entspricht, gemäß den erfassten Farbinformationen und dadurch Berechnens von Farbcharakteristika einer Anstrichfarbe, die dargestellt werden durch eine Helligkeitsänderung reflektierten Lichts gemäß einem Reflexionswinkel in Bezug auf einfallendes Licht,

wobei der Anstrichfarbspezifizierungsvorgang die Anstrichfarbe gemäß den berechneten Farbcharakteristika spezifiziert, und

wobei das computerlesbare Medium **dadurch gekennzeichnet ist, dass** bei dem Farbcharakteristikberechnungsvorgang Farbcharakteristika berechnet werden, die sich einer Kurve annähern, entlang der die Helligkeit konstant abnimmt, für einen Anstieg bei dem Reflexionswinkel von dem hervorgehobenen Abschnitt zu dem schattierten Abschnitt.

**Revendications**

1. Appareil de spécification de couleur de peinture, comprenant:

un moyen d'affichage d'image (12) configuré pour amener un dispositif d'affichage (33) à afficher une image numérique de sorte que puissent être désignées une partie mise en lumière et une partie ombrée de l'image numérique;

un dispositif d'acquisition d'informations de couleur (13) configuré pour acquérir les informations de couleur de la partie mise en lumière et de la partie ombrée désignées;

un moyen d'affichage de sélection d'informations de texture (15) configuré pour amener le dispositif d'affichage (33) à afficher des informations de texture de couleurs de peinture de sorte que puissent être sélectionnées les informations de texture d'une couleur de peinture;

un dispositif d'acquisition d'informations de texture (16) configuré pour acquérir les informations de texture sélectionnées;

un dispositif de spécification de couleur de peinture (20); et

un dispositif de calcul de caractéristiques de couleur (18) configuré pour utiliser un coefficient de correction correspondant aux informations de texture acquises selon les informations de couleur acquises et pour calculer ainsi les caractéristiques de couleur d'une couleur de peinture représentée par un changement de luminosité de la lumière réfléchie selon un angle de réflexion par rapport à la lumière incidente,

dans lequel le dispositif de spécification de couleur de peinture (20) est configuré pour spécifier une couleur de peinture selon les caractéristiques de couleur calculées, et

dans lequel l'appareil de spécification de couleur de peinture est **caractérisé par le fait que** le dispositif de calcul de caractéristiques de couleur (18) est configuré pour calculer les caractéristiques de couleur se rapprochant d'une courbe le long de laquelle la luminosité diminue constamment pour augmenter en angle de réflexion de la partie mise en lumière à la partie ombrée.

2. Appareil de spécification de couleur de peinture selon la revendication 1, dans lequel
le moyen d'affichage de sélection d'informations de texture (15) est configuré pour afficher les mots d'une impression de nuance d'une couleur de peinture qui représentent un changement de luminosité selon l'angle de réflexion de sorte que les mots puissent être sélectionnés comme informations de texture.

3. Appareil de spécification de couleur de peinture selon la revendication 1 ou 2, dans lequel
le dispositif d'acquisition d'informations de couleur (13) est configuré pour acquérir les informations de couleur en établissant la moyenne d'une plage prédéterminée comportant la partie mise en lumière ou la partie ombrée désignée.

4. Appareil de spécification de couleur de peinture selon l'une quelconque des revendications 1 à 3, comprenant par ailleurs:

une mémoire de coefficients de correction (17) configurée pour mémoriser une pluralité de combinaisons prédéfinies dans lesquelles les informations de texture correspondent au coefficient de correction,
dans lequel
le dispositif de calcul de caractéristiques de couleur (18) est configuré pour sélectionner le coefficient de correction correspondant aux informations de texture acquises à partir des combinaisons mémorisées et pour utiliser ainsi le coefficient de correction pour le calcul des caractéristiques de couleur.

5. Appareil de spécification de couleur de peinture selon l'une quelconque des revendications 1 à 4, comprenant par ailleurs:

une mémoire de caractéristiques d'échantillon (19) configurée pour mémoriser les caractéristiques de couleur mesurées auparavant des échantillons de peinture peints avec différentes couleurs de peinture,
dans lequel
le dispositif de spécification de couleur de peinture (20) est configuré pour spécifier la couleur de peinture selon la comparaison de caractéristiques de couleur entre les caractéristiques de couleur mémorisées et les caractéristiques de couleur calculées.

6. Appareil de spécification de couleur de peinture selon la revendication 5, dans lequel
le dispositif de spécification de couleur de peinture (20) est configuré pour spécifier une couleur de peinture se rapprochant des caractéristiques de couleur selon la comparaison entre les caractéristiques de couleur.

7. Appareil de spécification de couleur de peinture selon l'une quelconque des revendications 1 à 6, comprenant par ailleurs:
un moyen d'affichage de sélection de couleur de peinture (21) configuré pour amener le dispositif d'affichage (33) à afficher la couleur de peinture spécifiée de sorte que puisse être sélectionnée la couleur de peinture.

8. Appareil de spécification de couleur de peinture selon l'une quelconque des revendications 1 à 7, comprenant par ailleurs:
un détecteur de changement de teinte (14) configuré pour détecter un changement de teinte dans les informations de couleur acquises de la partie mise en lumière et les informations de couleur de la partie ombrée.

9. Procédé de spécification de couleur de peinture, comprenant:

une étape d'affichage d'image consistant à amener un dispositif d'affichage (33) à afficher une image numérique de sorte que puissent être désignées une partie mise en lumière et une partie ombrée de l'image numérique; une étape d'acquisition d'informations de couleur consistant à acquérir les informations de couleur de la partie mise en lumière et de la partie ombrée désignées; une étape d'affichage de sélection d'informations de texture consistant à amener le dispositif d'affichage (33) à afficher les informations de texture de couleurs de peinture de sorte que puissent être sélectionnées les informations de texture d'une couleur de peinture; une étape d'acquisition d'informations de texture consistant à acquérir les informations de texture sélectionnées; une étape de spécification de couleur de peinture consistant à spécifier une couleur de peinture; et une étape de calcul de caractéristiques de couleur consistant à utiliser un coefficient de correction correspondant aux informations de texture acquises selon les informations de couleur acquises et à calculer ainsi les caractéristiques de couleur d'une couleur de peinture représentée par un changement de luminosité de la lumière réfléchie selon un angle de réflexion par rapport à la lumière incidente,

dans lequel l'étape de spécification de couleur de peinture spécifie la couleur de peinture selon les caractéristiques de couleur calculées,

dans lequel le procédé de spécification de couleur de peinture est **caractérisé par le fait que** sont calculées, à l'étape de calcul de caractéristiques de couleur, les caractéristiques de couleur se rapprochant d'une courbe le long de laquelle la luminosité diminue constamment pour augmenter en angle de réflexion de la partie mise en lumière à la partie ombrée.

10. Programme d'ordinateur pour spécifier la couleur de peinture comprenant des instructions qui, lorsque le programme est exécuté par un ordinateur, amènent l'ordinateur à réaliser:

un processus d'affichage d'image destiné à amener un dispositif d'affichage (33) à afficher une image numérique de sorte que puissent être désignées une partie mise en lumière et une partie ombrée de l'image numérique; un processus d'acquisition d'informations de couleur destiné à acquérir les informations de couleur de la partie mise en lumière et de la partie ombrée désignées; un processus d'affichage de sélection d'informations de texture destiné à amener le dispositif d'affichage (33) à afficher les informations de texture des couleurs de peinture de sorte que puissent être sélectionnées les informations de texture d'une couleur de peinture; un processus d'acquisition d'informations de texture destiné à acquérir les informations de texture sélectionnées; un processus de spécification de couleur de peinture destiné à spécifier une couleur de peinture; et un processus de calcul de caractéristiques de couleur destiné à utiliser un coefficient de correction correspondant aux informations de texture acquises selon les informations de couleur acquises et à calculer ainsi les caractéristiques de couleur d'une couleur de peinture représentée par un changement de luminosité de la lumière réfléchie selon un angle de réflexion par rapport à la lumière incidente,

dans lequel le processus de spécification de couleur de peinture spécifie la couleur de peinture selon les caractéristiques de couleur calculées, et

dans lequel le programme d'ordinateur pour spécifier la couleur de peinture est **caractérisé par le fait que** lors du processus de calcul de caractéristique de couleur sont calculées les caractéristiques de couleur se rapprochant d'une courbe le long de laquelle la luminosité diminue constamment pour augmenter en angle de réflexion de la partie mise en lumière à la partie ombrée.

11. Support lisible par ordinateur comprenant des instructions qui, lorsqu'elles sont exécutées par un ordinateur, amènent l'ordinateur à réaliser:

un processus d'affichage d'image destiné à amener un dispositif d'affichage (33) à afficher une image numérique de sorte que puissent être désignées une partie mise en lumière et une partie ombrée de l'image numérique; un processus d'acquisition d'informations de couleur destiné à acquérir les informations de couleur de la partie mise en lumière et de la partie ombrée désignées; un processus d'affichage de sélection d'informations de texture destiné à amener le dispositif d'affichage (33) à afficher les informations de texture de couleurs de peinture de sorte que puissent être sélectionnées les informations de texture d'une couleur de peinture; un processus d'acquisition d'informations de texture destiné à acquérir les informations de texture sélectionnées; un processus de spécification de couleur de peinture destiné à spécifier une couleur de peinture; et un processus de calcul de caractéristiques de couleur destiné à utiliser un coefficient de correction correspondant aux informations de texture acquises selon les informations de couleur acquises et à calculer ainsi les caractéristiques de couleur d'une couleur de peinture représentée par un changement de luminosité de la lumière réfléchie selon un angle de réflexion par rapport à la lumière incidente,

dans lequel le processus de spécification de couleur de peinture spécifie la couleur de peinture selon les caractéristiques de couleur calculées, et

dans lequel le support lisible par ordinateur est **caractérisé par le fait que** lors du processus de calcul de caractéristiques de couleur sont calculées les caractéristiques de couleur se rapprochant d'une courbe le long de laquelle la luminosité diminue constamment pour augmenter en angle de réflexion de la partie mise en lumière à la partie ombrée.

FIG. 1

# FIG. 2

START

S11 DIGITAL IMAGE ACQUIRED? — NO

YES

S12 DISPLAY DIGITAL IMAGE

S13 DESIGNATION OF HIGHLIGHT AND SHADE COMPLETED? — NO

YES

S14 ACQUIRE COLOR INFORMATION OF HIGHLIGHT AND SHADE

S15 COLOR DIFFERENCE WITHIN PREDETERMINED RANGE? — NO

YES

S16 DISPLAY TEXTURE INFORMATION SELECTION

S17 SELECTION OF TEXTURE INFORMATION COMPLETED? — NO

YES

S18 ACQUIRE TEXTURE INFORMATION

S19 SELECT CORRECTION COEFFICIENT

S20 CALCULATE COLOR CHARACTERISTICS

S21 SPECIFY PAINT COLOR

S22 DISPLAY SELECTION OF PAINT COLOR

S23 PAINT COLOR SELECTED? — NO

YES

S24 OUTPUT PAINT COLOR INFORMATION

END

FIG. 3

SPECULAR LIGHT
SPECULAR GLOSS
0 deg

FACE
45(0)

HIGH-LIGHT
25

HIGH-LIGHT
15

INCIDENT
LIGHT
-45

SHADE
75

SHADE
110

TOP CLEAR

FLAKE PIGMENT

# FIG. 4

```
                    ┌──────────┐
                    │  START   │
                    └────┬─────┘
                         │
        ┌────────────────▼────────────────┐
        │ SELECT PAINT COLORS HAVING      │── S31
        │     DIFFERENT FF VALUES         │
        └────────────────┬────────────────┘
                         │
        ┌────────────────▼────────────────┐
        │        MEASURE COLOR            │── S32
        └────────────────┬────────────────┘
                         │
        ┌────────────────▼────────────────┐
        │       EXTRACT Y VALUE           │── S33
        └────────────────┬────────────────┘
                         │
        ┌────────────────▼────────────────┐
        │    CALCULATE Y VALUE WIDTH      │── S34
        └────────────────┬────────────────┘
                         │
        ┌────────────────▼────────────────┐
        │    NORMALIZE Y VALUE WIDTH      │── S35
        └────────────────┬────────────────┘
                         │
        ┌────────────────▼────────────────┐
        │  STORE CORRECTION COEFFICIENT   │── S36
        └────────────────┬────────────────┘
                         │
                    ┌────▼─────┐
                    │  RETURN  │
                    └──────────┘
```

# FIG. 5

| name | IV68 | SV68 | FF68 |
|---|---|---|---|
| 0=solid | 64.4 | 63.2 | 0.018 |
| 1=weak_pearl | 68.7 | 44.5 | 0.427 |
| 2=middl_pearl | 140 | 66 | 0.719 |
| 3=strong_pearl | 42 | 12.5 | 1.081 |
| 4=weak_metallic | 26.2 | 6.3 | 1.23 |
| 5=middl_metallic | 19.9 | 3.2 | 1.441 |
| 6=strong_metallic | 221.5 | 14.5 | 1.753 |

# FIG. 6

| name | FF68 | Y15 | Y25 | Y45 | Y75 | Y110 |
|---|---|---|---|---|---|---|
| 0=solid | 0.018 | 64.41 | 63.68 | 63.24 | 62.4 | 59.92 |
| 1=weak_pearl | 0.427 | 68.72 | 55.08 | 44.53 | 41.8 | 39.89 |
| 2=middl_pearl | 0.719 | 140 | 94.25 | 65.99 | 63.05 | 63.53 |
| 3=strong_pearl | 1.081 | 42.03 | 27.74 | 12.54 | 7.15 | 5.46 |
| 4=weak_metallic | 1.23 | 26.24 | 16.27 | 6.25 | 3.51 | 2.83 |
| 5=middl_metallic | 1.441 | 19.86 | 10.44 | 3.23 | 1.49 | 1.12 |
| 6=strong_metallic | 1.753 | 221.48 | 80.78 | 14.54 | 3.36 | 1.88 |

# FIG. 7

| name | r)Y15-Y75 | ar)Y15-Y25 | br)Y25-Y45 | cr)Y45-Y75 |
|---|---|---|---|---|
| 0=solid | 2.01 | 0.73 | 0.44 | 0.84 |
| 1=weak_pearl | 26.92 | 13.64 | 10.55 | 2.73 |
| 2=middl_pearl | 76.95 | 45.75 | 28.26 | 2.94 |
| 3=strong_pearl | 34.88 | 14.29 | 15.2 | 5.39 |
| 4=weak_metallic | 22.73 | 9.97 | 10.02 | 2.74 |
| 5=middl_metallic | 18.37 | 9.42 | 7.21 | 1.74 |
| 6=strong_metallic | 218.12 | 140.7 | 66.24 | 11.18 |

# FIG. 8

| name | FF68 | r)Y15–Y75 | ar)Y15–Y25 | br)Y25–Y45 | cr)Y45–Y75 | d)Y110/Y75 |
|---|---|---|---|---|---|---|
| 0=solid | 0.018 | 1.000 | 0.363 | 0.219 | 0.418 | 0.960 |
| 1=weak_pearl | 0.427 | 1.000 | 0.507 | 0.392 | 0.101 | 0.954 |
| 2=middl_pearl | 0.719 | 1.000 | 0.595 | 0.367 | 0.038 | 1.008 |
| 3=strong_pearl | 1.081 | 1.000 | 0.410 | 0.436 | 0.155 | 0.764 |
| 4=weak_metallic | 1.230 | 1.000 | 0.439 | 0.441 | 0.121 | 0.806 |
| 5=middl_metallic | 1.441 | 1.000 | 0.513 | 0.392 | 0.095 | 0.752 |
| 6=strong_metallic | 1.753 | 1.000 | 0.645 | 0.304 | 0.051 | 0.560 |

FIG. 9

| MEASUREMENT ANGLE | VALUE | CALCULATION FORMULA | INPUT VALUE | CALCULATED VALUE | CALCULATION ORDER | ACTUAL VALUE |
|---|---|---|---|---|---|---|
| 15 | Y15 | Y15 | 42.03 | 42.03 | 1 | 42.03 |
| 25 | Y25 | Y45+(Y15−Y75)*br | | 27.74 | 5 | 27.74 |
| 45 | Y45 | Y75+(Y15−Y75)*cr | | 12.54 | 4 | 12.54 |
| 75 | Y75 | Y75 | 7.15 | 7.15 | 2 | 7.15 |
| 110 | Y110 | Y110=Y75×d) | | 5.4626 | 3 | 5.46 |

EP 3 605 467 B1

FIG. 10

**EP 3 605 467 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005110797 A1
- US 8606731 B2

- JP 2005157771 A